# EUROPEAN PATENT SPECIFICATION

(11) **EP 2 999 197 B1**
(45) Date of publication and mention of the grant of the patent: **30.10.2019**
(21) Application number: 14879762.4
(22) Date of filing: 14.11.2014
(51) Int. Cl.: H04M 1/02, G06F 1/16

(54) **MOBILE TERMINAL**
MOBILES ENDGERÄT
TERMINAL MOBILE

(30) Priority: 26.01.2014 CN 201410038298
(43) Date of publication of application: 23.03.2016
(73) Proprietor: Xiaomi Inc., Beijing 100085 (CN)
(72) Inventor: GAO, Yuan, Beijing 100085 (CN); HAN, Gaocai, Beijing 100085 (CN); JIN, Hongzhi, Beijing 100085 (CN); ZHANG, Bin, Beijing 100085 (CN)
(74) Representative: Robson, Aidan John
(86) International application number: PCT/CN2014/091193
(87) International publication number: WO 2015/109886

(56) References cited:
- CN-A- 101 754 617
- CN-A- 102 883 033
- CN-A- 103 259 888
- CN-A- 103 747 641
- US-A1- 2008 014 787
- US-A1- 2010 258 626
- US-A1- 2013 016 267
- US-A1- 2013 215 559
- US-B1- 8 403 136

## Description

### CROSS REFERENCE TO RELATED APPLICATION

The present application is based on and claims priority to Chinese Patent Application No. 201410038298.5, filed on January 26, 2014.

### FIELD

The present disclosure relates to a field of mobile terminal assembling technique, and more particularly to a mobile terminal.

### BACKGROUND

Individual element design is the most crucial step in the structural designs of mobile terminals such as mobile phones, iPads, palm pilots etc. The individual element design refers to a design of individual elements of the mobile terminal which can facilitate production and perform certain functions. According to the individual element design, the whole mobile terminal can be assembled, disassembled and maintained by dealing with independent components. In a mobile terminal, the electronic elements (such as chips, resistances, capacitors, etc.) are standard elements, whose sizes usually cannot be changed. The mechanical elements (such as shells of mobile terminals, support frames of electronic apparatus, etc.) are customized elements, whose structures and sizes should be designed based on practical situations. The individual element design relates to designs of customized elements.

Currently, there are two common mobile terminal structures. The first one is a structure consisting of a front shell and a back shell, i.e. the overall structure of the mobile terminal is formed of the front shell and the back shell, in which the front shell is provided with a liquid crystal display (LCD), support frames and many other elements, while the back shell is an appearance component enclosing the side surfaces and the bottom surfaces of the mobile terminal. The other one is a structure consisting of a front shell, a back shell and a battery cover, in which the back shell is further provided with a battery cover for loading and unloading the battery in addition to the first structure.

The preceding description indicates that the above two mobile terminal structure both consist of relatively fewer components, such that each component must carry more electronic elements of the mobile terminal (for example, the front shell is provided with many elements). Because most of the electronic elements of the mobile terminal are standard elements, the structure of each component must meet the mounting requirement of each electronic element arranged thereon, and hence the structures of most components of the mobile terminal become complex. The more complex the structure of the component is, the more complicated the manufacturing process of the component is, which leads to an increase in the manufacturing cost of the component. Moreover, the complex manufacturing process may result in relatively lower yield of the component, which further increases the manufacturing cost. If there is any slight collision during the operation of the mobile terminal, the components with complex structures may need maintenance or even be damaged, which makes the maintenance cost of the components high. Thus, the components of complex structures have high manufacturing cost and maintenance cost, and correspondingly the mobile terminals are high in the manufacturing cost and maintenance cost, thereby weakening the market competitiveness of the mobile terminals.

US patent application US 2008/0014787 describes a mobile terminal comprising a frame to which a front cover, rear cover, and battery cover are mounted. The frame supports a partitioning plate that supports a display and touch screen. A circuit support substrate is provided between the rear cover and the frame. Documents US 2013/215559 A1 and CN 103 259 888 A relate to constructional details of mobile terminals.

### SUMMARY

The invention is as set out in the independent claims, further aspects of the invention are outlined in the dependent claims. Embodiments that do not fall within the scope of the claims do not describe part of the invention.

The present disclosure provides a mobile terminal to solve problems of the mobile terminals discussed in the background, i.e. high manufacturing cost and maintenance cost.

In order to solve the above technical problems, the present disclosure provides the following technical solution.

According to a first aspect of embodiments of the present disclosure, a mobile terminal is provided. The mobile terminal comprises: a middle shell configured as a middle support of the mobile terminal; a front shell fixed on a front side of the middle shell; a back cover fixed on a back side of the middle shell and configured to cover the back side of the middle shell; a battery cover fixed on the back cover and configured to cover a battery; and a display screen and a touch screen arranged on the front shell in sequence, wherein the front shell is configured to support the display screen and the touch screen, and the display screen is positioned between the front shell and the touch screen. Both the middle shell (5) and the back cover (3) are configured to support electronic elements of the mobile terminal arranged thereon. A protrusion is arranged on an edge of a front side of a periphery of the front shell, and abuts an edge of the front side surface of the middle shell.

Preferably, in the mobile terminal, the middle shell comprises a frame and a transverse beam disposed in the frame and dividing an area enclosed by the frame into a plurality of sub-areas, and the plurality of sub-areas include at least a circuit board receiving area and a battery receiving area.

Preferably, in the mobile terminal, an operation hole for battery loading and unloading is formed at a position of the back cover corresponding to the battery receiving area.

Preferably, in the mobile terminal, connecting holes are formed in corresponding positions on edges of the front shell, the middle shell and the back cover respectively, and the connecting holes comprise a first connecting hole, a second connecting hole and a third connecting hole respectively,
wherein: the first connecting hole is formed in the back cover, the second connecting hole formed in the middle shell, and the third connecting hole formed in the front shell, and the front shell, the middle shell and the back cover are connected via a threaded connecting member fitted with the connecting holes.

Preferably, in the mobile terminal, a first protrusion is arranged at a position of a front side surface of the back cover corresponding to the first connecting hole, and a recess is arranged at a position of the middle shell corresponding to the first protrusion, and the recess is fitted with the first protrusion.

Preferably, in the mobile terminal, a second protrusion is arranged on a back side surface of the front shell; the third connecting hole is configured to be penetrated by the second protrusion and to be a threaded hole fitted with the threaded connecting member; and the second protrusion is disposed in the second connecting hole.

Preferably, in the mobile terminal, a side surface of the second protrusion fitted with the second connecting hole is a step-shape limit surface.

Preferably, in the mobile terminal, the battery cover is fixed with the back cover via a snap-fit; and outer peripheral surfaces of the battery cover, the middle shell and the protrusion form an outer side surface of the mobile terminal.

Preferably, in the mobile terminal, a step groove is formed in a front side surface of the front shell, the display screen is connected with a bottom of the step groove via a snap-fit, and a front side surface of the display screen and a step surface of the step groove are in a same plane; the touch screen is connected with a top of the step groove via a snap-fit, a back side surface of the touch screen abuts the step surface, and a front side surface of the touch screen and the front side surface of the front shell are in a same plane.

The technical solution of embodiments of the present disclosure has the following advantages.

The whole mobile terminal consists of more components including the middle shell, the front shell, the back cover, the display screen, the touch screen and the battery cover, such that the electronic elements are distributed on more components. Accordingly, there are fewer electronic elements on each component, thus avoiding forming more mounting structures on each component. In such a case, the manufacturing complexity of each component can be reduced, the manufacturing process can be simplified, and thus the component manufacturing yield may be improved. Due to more components, the significance and cost of each component are decreased, and the damage of each component caused by failures is reduced, thereby bringing down the maintenance cost of components. In terms of the whole mobile terminal, both the manufacturing cost and the maintenance cost can be reduced.

It shall be understood that the above description and the following detailed description are only exemplary, and cannot be construed to limit the present disclosure.

### BRIEF DESCRIPTION OF THE DRAWINGS

In order to more clearly illustrate the technical solution in the embodiment of the present disclosure, drawings for description of the embodiment are briefly introduced. Obviously, those skilled in the art can obtain other drawings based on the following drawings, without involving creative efforts.
Fig. 1 is an exploded schematic view of a mobile terminal according to an exemplary embodiment;
Fig. 2 is a partial schematic view of Fig. 1 according to an exemplary embodiment;
Fig. 3 is a schematic view of a middle shell according to an exemplary embodiment;
Fig. 4 is a partial cross-section schematic view of the mobile terminal according to an exemplary embodiment;
Fig. 5 is a schematic view showing of a plurality of sub-areas of a frame of the mobile terminal according to an exemplary embodiment.

The drawings are incorporated as a part of the specification to show the embodiment fulfilling the present invention and explain, along with the specification, the principle of the invention.

### DETAILED DESCRIPTION

The embodiments of the present disclosure provide a mobile terminal, which solves the problem discussed in the background, i.e. high manufacturing cost and maintenance cost.

The technical solution in the embodiment of the present disclosure will be further illustrated in detail with reference to the drawings of the specification, such that those skilled in the art can understand the technical solution better, and the objective, characteristics and advantages of the embodiment may become apparent and more readily appreciated.

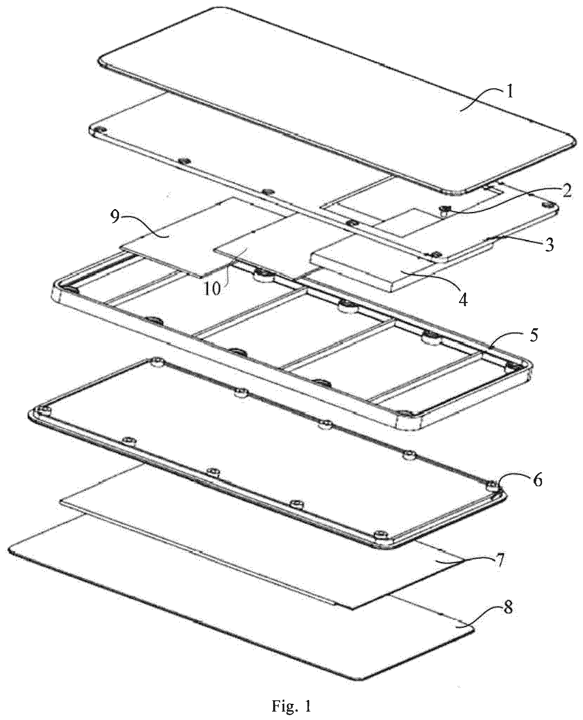

Referring to Fig. 1, it shows the structure of the mobile terminal provided by an embodiment of the present disclosure. The mobile terminal shown in Fig. 1 includes a middle shell 5, a front shell 6, a back cover 3, a battery cover 1, a display screen 7and a touch screen 8.

The middle shell 5 is the main support frame of the mobile terminal disclosed in the embodiment, and configured as a middle support of the mobile terminal. The middle shell 5 is configured to support the electronic elements of the mobile terminal arranged thereon, and meanwhile is configured as a mounting base for the front shell 6 and the back cover 3. Correspondingly, the outer peripheral surface of the middle shell 5 forms a part of the outer side surface of the mobile terminal, or is configured as the whole outer side surface of the mobile terminal.

The front shell 6 is a front shell body of the whole mobile terminal, and fixed on a front side of the middle shell 5. Usually, the front shell 6 is an auxiliary component functions as a support base of the display elements. In other words, the front shell 6 is configured to support the display screen 7 and the touch screen 8.

The back cover 3 is a back shell body of the whole mobile terminal, and fixed on a back side of the middle shell 5 to cover the back side of the middle shell 5. Meanwhile, the back cover 3 provides a mounting base for elements of the mobile terminal, such as antenna and flexible boards. The battery cover 1 is fixed on the back cover 3 to cover a battery. Usually, the back cover 3 of the mobile terminal is provided with a hole for removing batteries. The configuration of the battery cover 1 simplifies the removal of batteries from the mobile terminal, which only needs to open the battery cover 1 during the battery loading or removing process.

The display screen 7 and the touch screen 8 are the display component and the operation component of the mobile terminal respectively, and are arranged (generally fixed) on the front shell 6 in sequence, and the display screen 7 is located between the front shell 6 and the touch screen 8.

With respect to the background art, the mobile terminal provided in the embodiment of the present disclosure consists of more components, including the middle shell 5, the front shell 6, the back cover 3, the battery cover 1, the display screen 7 and the touch screen 8, such that the electronic elements of the mobile terminal are distributed in the more components rather than clustered on the front shell as in the background art. Correspondingly, there are fewer electronic elements on each component, such that each component does not need to be provided with more mounting structures, which can reduce the manufacturing complexity of each component, simplify the manufacturing process, and thus improve the component manufacturing yield. Due to more components, the significance and cost of each component are decreased relatively, and the damage of components caused by failures is reduced, thereby bringing down the maintenance cost of components. Consequently, both the manufacturing cost and the maintenance cost of the mobile terminal can be reduced.

The mobile terminal consists of more components, such that most of the elements and components can be recovered when the exterior surface of the mobile terminal is damaged, and thus the manufacturing cost and the maintenance cost of the mobile terminal can be further reduced.

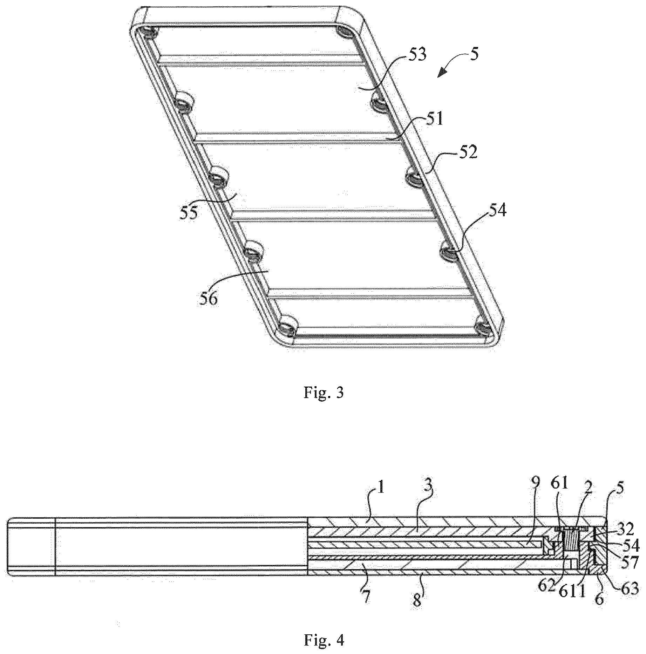

The middle shell 5 as the main support frame of the mobile terminal can have various structures, which can be determined by the specific type of mobile terminals. Usually, the middle shell 5 needs to have a relatively higher strength to optimize the support function. Therefore, manufactures tend to employ materials with higher strength (e.g. metals) as the manufacturing material of the middle shell 5, however, which will increase the manufacturing cost of the middle shell 5. In order to solve the above problem concerning cost, embodiments of the present disclosure provide a middle shell of a specific structure. Referring to Fig. 3, the middle shell shown in Fig. 3 includes a frame 52 and a transverse beam 51, in which the transverse beam 51 is disposed in the frame 52 and divides the area enclosed by the frame 52 into a plurality of sub-areas that are configured to arrange the electronic elements of the mobile terminal. The middle shell 5 is configured to have a frame structure (like a skeleton of a building), which can improve the strength of the middle shell 5. The transverse beam 51 enhances the strength of the whole middle shell 5 and function to form distribution areas for the various electronic elements. In the embodiment of the present disclosure, the middle shell 5 has a frame structure that is simple and has high replaceability, so the maintenance cost can be effectively controlled when there is any damage.

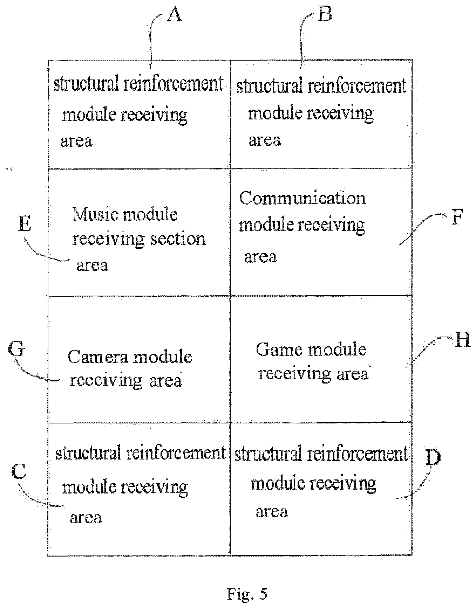

Referring to Fig. 3, the plurality of sub-areas can include a circuit board receiving area (for example, a circuit board receiving area 53 and a circuit board receiving area 55 configured to mount a circuit board 9 and a circuit board 10 respectively) and a battery receiving area 56 (the battery receiving area 56 configured to receive a battery 4). Of course, the plurality of sub-areas can have other functions, and the embodiment of the present disclosure does not limit the function of the sub-areas. Moreover, the embodiment is not limited to divide the area into sub-areas by using the transverse beams, which can also be realized by using longitudinal beams (i.e. the beams extending in the length direction of the mobile terminal) or by using a combination of the longitudinal beams and the transverse beams. Referring to Fig. 5, it shows a sub-areas division method, in which the area enclosed by the frame 52 is divided into a structural reinforcement module receiving area (including a structural reinforcement module receiving area A, a structural reinforcement module receiving area B, a structural reinforcement module receiving area C and a structural reinforcement module receiving area D), a music module receiving area E, a communication module receiving area F, a camera module receiving area G and a game module receiving area H. Those skilled in the art can adjust the numbers of the transverse beams 51 and the longitudinal beams, and the configuration thereof based on the type of mobile terminals and the arrangement of electronic elements. The embodiment of the present disclosure cannot be constructed to limit the numbers of the transverse beams 51 and the longitudinal beams, and the configuration thereof.

When the sub-areas include the battery receiving area 56, an operation hole 31 for battery loading and unloading is formed in a position of the back cover 3 corresponding to the battery receiving area 56. In such a way, the battery is substantially exposed on the back cover 3, so that the other electronic elements of the mobile terminal on the back cover 3 will not be damaged during the operation process, because the battery can be loaded and unloaded in the operation hole 31. In the practical unloading process, other elements of the mobile terminal may be frequently unloaded, for example, a smart card. Therefore, the back cover 3 can be provided with operation holes corresponding to other elements.

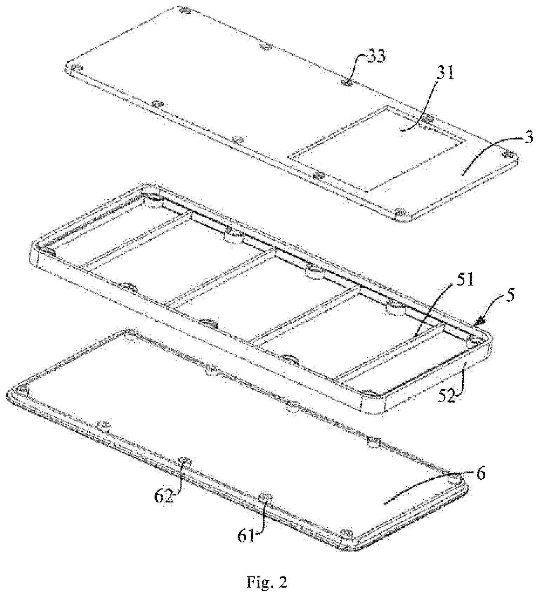

In the mobile terminal of the embodiment of the present disclosure, the front shell 6 is fixed on the front side of the middle shell 5, the back cover 3 is fixed on the back side of the middle shell 5, and the above components can be fixed via a direct fixation (i.e. the front shell 6 is directly fixed on the front side of the middle shell 5 via a connecting member or a connecting structure; and the back cover 3 is directly fixed on the back side of the middle shell 5 via a connecting member or a connecting structure) or an indirect fixation (for example, the front shell 6 is fixed with the back shell 3, and the middle shell 5 is clamped therebetween). In the fixation process, fixation can be implemented by using connecting members or connecting structures (e.g. snap-fit structures). Referring to Figs. 2, 3 and 4, the embodiment of the present disclosure provides a connecting structure. In the present embodiment, connecting holes are arranged at corresponding positions on edges of the front shell 6, the middle shell 5 and the back cover 3 respectively, namely a first connecting hole 33, a second connecting hole 57 and a third connecting hole 62, in which the first connecting hole 33 is formed in the back cover 3, the second connecting hole 57 is formed in the middle shell 5, the third connecting hole 62 is formed in the front shell 6, and the front shell 6, the middle shell 5 and the back cover 3 are connected via a connecting member to be disposed in these connecting holes, for example, threaded connecting members. In the process of assembling, after the connecting holes on the front shell 6, the middle shell 5 and the back cover 3 are aligned, the front shell 6, the middle shell 5 and the back cover 3 are connected via the connecting member so as to implement a fixed assembly.

If the front shell 6, the middle shell 5 and the back cover 3 are connected via the connecting members after simply superposed, there may be a problem of poor assemble stability, and the volume of the whole mobile terminal may become relatively huge. In order to solve the problems, the back cover 3 in the embodiment of the present disclosure is provided with a first protrusion 32 at a position of the front side surface of the back cover 3 corresponding to the first connecting hole 33, and a recession 54 is arranged at a position of the middle shell 5 corresponding to the first protrusion 32, and the recession 54 is fitted with the first protrusion 32 to position the back cover 3 and the middle shell 5. In such a way, after the first protrusion 32 is fitted with the recession 54, the back cover 3 and the middle shell 5 can be connected via the connecting member. Therefore, the components are connected more compactly, and the stability of assembling components is improved. The recession 54 is fixed with the first protrusion 32 via a snap-fit, which ensures positioning and further improves the assembling effect of the components.

In the mobile terminal of the embodiment of the present disclosure, a second protrusion 61 is arranged on the back side surface of the front shell 6; the third connecting hole 62 is configured to be penetrated by the second protrusion 61 and to be fitted with the threaded connecting member; and the second protrusion 61 and the connecting hole are positioned and fitted with each other. As shown in Fig. 4, the second protrusion 61 is disposed in the second connecting hole 57. The threaded connecting member (e.g. a bolt 2) passes through the first connecting hole 33 and is connected to the third connecting hole 62. Moreover, the middle shell 5 is disposed between the front shell 6 and the back cover 3, and the second protrusion 61 is positioned in the connecting hole 62, so that the middle shell 5 is fixed with the middle shell 5. The positioning and fitting between the middle shell 5 and the front shell 6 may improve the compactivity and assembling stability of the components. The side surface of the second protrusion 61 fitted with the second connecting hole 57 is a step-shape limit surface 611, in order to improve manufacturability of the middle shell 5 and the front shell 6 and hence to realize rapid positioning and assembling. The bolt 2 can be a bolt having a higher reproducibility (i.e. the performance of being processed repeatedly) for the convenience of reproducibility and maintenance.

Similarly, in the mobile terminal of the embodiment of the present disclosure (as shown in Fig. 4), a protrusion 63 is arranged on the edge of the front side of a periphery of the front shell 6, and abuts an edge of the front side surface of the middle shell 5, for the convenience of assembling the front shell 6 and the middle shell 5. In the embodiment of the present disclosure, the battery cover 1 can be detachably connected to the back cover 3 via the connecting member or connecting structure. The connecting structure (e.g. a snap-fit) can ensure the connection and aesthetic appearance of the exterior surface of the mobile terminal. The outer peripheral surfaces of the battery cover 1, the middle shell 5 and the protrusion 63 form an outer side surface of the mobile terminal, such that the assembly surfaces of the battery cover 1 and the middle shell 5 are located at the side of the mobile terminal, thus facilitating the removal of the battery cover 1 and improving the operation efficiency.

In an embodiment of the present disclosure, the display screen 7 and the touch screen 8 can be connected with the front shell 6 via the connecting member, and of course, be connected with the front shell 6 via fixed connecting structures. Referring to Fig. 4, a step groove is formed in the front side surface of the front shell 6, in which the display screen 7 is connected with a bottom of the step groove via a snap-fit, a front side surface of the display screen 7 and a step surface of the step groove are in the same plane. The touch screen 8 is connected with a top of the step groove via a snap-fit, a back side surface of the touch screen 8 abuts the step surface, and a front side surface of the touch screen 8 and the front side surface of the front shell 6 are in the same plane.

The mobile terminal provided in embodiments of the present disclosure can be a mobile phone, an iPad, a palm pilot, POS etc. The type of the mobile terminals is not limited in the present disclosure.

It shall be noted that in the embodiment of the present disclosure, "front side" or "front side surface" means a side or a side surface of the components close to the user operation interface or the display interface; while "back side" or "back side surface" means a side or a side surface of the components apart from the user operation interface or the display interface.

Each embodiment of the specification can be described in a progressive manner; the same or similar parts in each embodiment can refer to each other; the focus in each embodiment is the respective distinction from the other embodiments.

The above embodiments of the present disclosure cannot be constructed to limit the protection scope of the disclosure.

## Claims

1. A mobile terminal, comprising:
a middle shell (5) configured as a middle support of the mobile terminal;
a front shell (6) fixed on a front side of the middle shell (5);
a back cover (3) fixed on a back side of the middle shell (5) and configured to cover the back side of the middle shell (5); and
a display screen (7) and a touch screen (8) arranged on the front shell (6) in sequence, wherein the front shell (6) is configured to support the display screen (7) and the touch screen (8), and the display screen (7) is positioned between the front shell (6) and the touch screen (8);
wherein : the mobile terminal further comprises a battery cover (1) fixed on the back cover (3) and configured to cover a battery;
both the middle shell (5) and the back cover (3) are configured to support electronic elements of the mobile terminal arranged thereon; and
a protrusion (63) is arranged on an edge of a front side of a periphery of the front shell (6), and the protrusion (63) abuts an edge of the front side surface of the middle shell (5).

2. The mobile terminal according to claim 1, wherein the middle shell (5) comprises a frame (52) and a transverse beam (51) disposed in the frame (52) and dividing an area enclosed by the frame into a plurality of sub-areas, and the plurality of sub-areas comprise at least a circuit board receiving area (53 or 55) and a battery receiving area (56).

3. The mobile terminal according to claim 2, wherein an operation hole for battery loading and unloading is formed in a position of the back cover (3) corresponding to the battery receiving area (56).

4. The mobile terminal according to claim 1, wherein connecting holes are formed in corresponding positions on edges of the front shell (6), the middle shell (5) and the back cover (3) respectively, the connecting holes comprising a first connecting hole (33), a second connecting hole (57) and a third connecting hole (62) respectively, wherein:
the first connecting hole (33) is formed in the back cover (3), the second connecting hole (57) is formed in the middle shell (5), the third connecting hole (62) is formed in the front shell (6), and the front shell (6), the middle shell (5) and the back cover (3) are connected via a threaded connecting member fitted with the connecting holes.

5. The mobile terminal according to claim 4, wherein a first protrusion (32) is arranged at a position of a front side surface of the back cover (3) corresponding to the first connecting hole (33), and a recess (54) is arranged at a position of the middle shell (5) corresponding to the first protrusion (32), and the recess (54) is fitted with the first protrusion (32).

6. The mobile terminal according to claim 5, wherein a second protrusion (61) is arranged on a back side surface of the front shell (6); the third connecting hole (62) is configured to be penetrated by the second protrusion (61) and to be a threaded hole fitted with the threaded connecting member; and the second protrusion (61) is disposed in the second connecting hole (57).

7. The mobile terminal according to claim 6, wherein a side surface of the second protrusion (61) fitted with the second connecting hole (57) is a step-shape limit surface (611).

8. The mobile terminal according to claim 1, wherein the battery cover (1) is fixed with the back cover (3) via a snap-fit; and outer peripheral surfaces of the battery cover (1), the middle shell (5) and the protrusion (63) form an outer side surface of the mobile terminal.

9. The mobile terminal according to any one of claims 1 to 8, wherein a step groove is formed in a front side surface of the front shell (6), the display screen (7) is connected with a bottom of the step groove via a snap-fit, and a front side surface of the display screen (7) and a step surface of the step groove are in a same plane;
the touch screen (8) is connected with a top of the step groove via a snap-fit, a back side surface of the touch screen (8) abuts the step surface, and a front side surface of the touch screen (8) and the front side surface of the front shell (6) are in a same plane.

## Patentansprüche

1. Mobil-Endgerät, umfassend:
eine Mittelschale (5), die als ein mittlerer Träger des Mobil-Endgeräts gestaltet ist;
eine vordere Schale (6), die an einer Vorderseite der Mittelschale (5) befestigt ist;
eine Rückwand (3), die an einer Rückseite der Mittelschale (5) befestigt ist und zum Abdecken der Rückseite der Mittelschale (5) gestaltet ist; und
einen Anzeigebildschirm (7) und einen Touchscreen (8), die nacheinander auf der vorderen Schale (6) angeordnet sind, wobei die vordere Schale (6) zum Tragen des Anzeigebildschirms (7) und des Touchscreens (8) gestaltet ist und der Anzeigebildschirm (7) zwischen der vorderen Schale (6) und dem Touchscreen (8) positioniert ist;
wobei:
das Mobil-Endgerät ferner einen Batteriedeckel (1) aufweist, der an der Rückwand (3) befestigt ist und zum Abdecken einer Batterie gestaltet ist;
sowohl die Mittelschale (5) als auch die Rückwand (3) zum Tragen von daran angeordneten elektronischen Elementen des Mobil-Endgeräts gestaltet sind; und
ein Vorsprung (63) an einem Rand einer Vorderseite eines Umfangs der vorderen Schale (6) angeordnet ist und der Vorsprung (63) an einem Rand der Vorderseitenfläche der Mittelschale (5) in Anlage ist.

2. Mobil-Endgerät nach Anspruch 1, wobei die Mittelschale (5) einen Rahmen (52) und einen Querträger (51), der in dem Rahmen (52) angeordnet ist und einen von dem Rahmen eingeschlossenen Bereich in mehrere Teilbereiche unterteilt, aufweist und die mehreren Teilbereiche wenigstens einen Platinenaufnahmebereich (53 oder 55) und einen Batterieaufnahmebereich (56) umfassen.

3. Mobil-Endgerät nach Anspruch 2, wobei an einer Position der Rückwand (3), die dem Batterieaufnahmebereich (56) entspricht, ein Bedienungsloch zum Laden und Entladen der Batterie gebildet ist.

4. Mobil-Endgerät nach Anspruch 1, wobei an entsprechenden Positionen an Rändern der vorderen Schale (6), der Mittelschale (5) bzw. der Rückwand (3) Verbindungslöcher gebildet sind, wobei die Verbindungslöcher ein erstes Verbindungsloch (33), ein zweites Verbindungsloch (57) bzw. ein drittes Verbindungsloch (62) umfassen, wobei:
das erste Verbindungsloch (33) in der Rückwand (3) gebildet ist, das zweite Verbindungsloch (57) in der Mittelschale (5) gebildet ist, das dritte Verbindungsloch (62) in der vorderen Schale (6) gebildet ist und die vordere Schale (6), die Mittelschale (5) und die Rückwand (3) durch ein in die Verbindungslöcher eingefügtes mit Gewinde versehenes Verbindungselement verbunden sind.

5. Mobil-Endgerät nach Anspruch 4, wobei ein erster Vorsprung (32) an einer Position einer Vorderseitenfläche der Rückwand (3), die dem ersten Verbindungsloch (33) entspricht, angeordnet ist und eine Aussparung (54) an einer Position der Mittelschale (5), die dem ersten Vorsprung (32) entspricht, angeordnet ist und die Aussparung (54) mit dem ersten Vorsprung (32) zusammengefügt ist.

6. Mobil-Endgerät nach Anspruch 5, wobei ein zweiter Vorsprung (61) an einer Rückseitenfläche der vorderen Schale (6) angeordnet ist; das dritte Verbindungsloch (62) gestaltet ist, so dass der zweite Vorsprung (61) in es eindringt und es ein mit Gewinde versehenes Loch ist, in welches das mit Gewinde versehene Verbindungselement eingefügt ist; und der zweite Vorsprung (61) im zweiten Verbindungsloch (57) angeordnet ist.

7. Mobil-Endgerät nach Anspruch 6, wobei eine Seitenfläche des zweiten Vorsprungs (61), der in das zweite Verbindungsloch (57) eingefügt ist, eine stufenförmige Begrenzungsfläche (611) ist.

8. Mobil-Endgerät nach Anspruch 1, wobei der Batteriedeckel (1) über eine Schnappverbindung an der Rückwand (3) befestigt ist; und äußere Randflächen des Batteriedeckels (1), der Mittelschale (5) und des Vorsprungs (63) eine Außenseitenfläche des Mobil-Endgeräts bilden.

9. Mobil-Endgerät nach einem der Ansprüche 1 bis 8, wobei in einer Vorderseitenfläche der vorderen Schale (6) eine Stufennut gebildet ist, der Anzeigebildschirm (7) über eine Schnappverbindung mit einem Boden der Stufennut verbunden ist und eine Vorderseitenfläche des Anzeigebildschirms (7) und eine Stufenfläche der Stufennut in einer gleichen Ebene sind;
der Touchscreen (8) durch eine Schnappverbindung mit einer Oberseite der Stufennut verbunden ist, eine Rückseitenfläche des Touchscreens (8) an der Stufenfläche in Anlage ist und eine Vorderseitenfläche des Touchscreens (8) und die Vorderseitenfläche der vorderen Schale (6) in einer gleichen Ebene sind.

## Revendications

1. Terminal mobile, comprenant :
une coque centrale (5) configurée comme un support central pour le terminal mobile ;
une coque avant (6) fixée sur un côté avant de la coque centrale (5) ;
un couvercle arrière (3) fixé sur un côté arrière de la coque centrale (5) et configuré pour couvrir le côté arrière de la coque centrale (5) ; et
un écran d'affichage (7) et un écran tactile (8) arrangés sur la coque avant (6) en séquence, où la coque avant (6) est configurée pour soutenir l'écran d'affichage (7) et l'écran tactile (8), et l'écran d'affichage (7) est positionné entre la coque avant (6) et l'écran tactile (8) ;
où : le terminal mobile comprend en outre un couvercle de pile (1) fixé sur le couvercle arrière (3) et configuré pour couvrir une pile ;
la coque centrale (5) et le couvercle arrière (3) sont configurés tous les deux pour soutenir les éléments électroniques du terminal mobile arrangés dessus ; et
une saillie (63) est arrangée sur un bord d'un côté avant d'une périphérie de la coque avant (6), et la saillie (63) aboute un bord de la surface du côté avant de la coque centrale (5).

2. Terminal mobile selon la revendication 1, dans lequel la coque centrale (5) comprend un cadre (52) et une barre transversale (51) disposée dans le cadre (52) et divisant une zone enfermée par le cadre en une pluralité de sous-zones, et la pluralité de sous-zones comprend au moins une zone de réception de carte de circuit imprimé (53 ou 55) et une zone de réception de pile (56).

3. Terminal mobile selon la revendication 2, dans lequel un trou opérationnel pour la pose et la dépose de la pile est formé dans une position du couvercle arrière (3) correspondant à la zone de réception de pile (56).

4. Terminal mobile selon la revendication 1, dans lequel des trous de connexion sont formés dans des positions correspondantes sur des bords de la coque avant (6), de la coque centrale (5) et du couvercle arrière (3) respectivement, les trous de connexion comprenant un premier trou de connexion (33), un deuxième trou de connexion (57) et un troisième trou de connexion (62) respectivement, où :
le premier trou de connexion (33) est formé dans le couvercle arrière (3), le deuxième trou de connexion (57) est formé dans la coque centrale (5), le troisième trou de connexion (62) est formé dans la coque avant (6), et la coque avant (6), la coque centrale (5) et le couvercle arrière (3) sont connectés via un membre de connexion fileté monté avec les trous de connexion.

5. Terminal mobile selon la revendication 4, dans lequel une première saillie (32) est arrangée à une position d'une surface du côté avant du couvercle arrière (3) correspondant au premier trou de connexion (33) et un évidement (54) est arrangé à une position de la coque centrale (5) correspondant à la première saillie (32), et l'évidement (54) est monté avec la première saillie (32).

6. Terminal mobile selon la revendication 5, dans lequel une deuxième saillie (61) est arrangée sur une surface du côté arrière de la coque avant (6) ; le troisième trou de connexion (62) est configuré pour être pénétré par la deuxième saillie (61) et pour être un trou fileté monté avec le membre de connexion fileté ; et la deuxième saillie (61) est disposée dans le deuxième trou de connexion (57).

7. Terminal mobile selon la revendication 6, dans lequel une surface latérale de la deuxième saillie (61) montée avec le deuxième trou de connexion (57) est une surface limite en forme de gradin (611).

8. Terminal mobile selon la revendication 1, dans lequel le couvercle de pile (1) est fixé au couvercle arrière (3) via un enclenchement ; et des surfaces périphériques externes du couvercle de pile (1), de la coque centrale (5) et de la saillie (63) forment une surface latérale externe du terminal mobile.

9. Terminal mobile selon l'une quelconque des revendications 1 à 8, dans lequel une rainure en gradin est formée dans une surface du côté avant de la coque avant (6), l'écran d'affichage (7) est connecté à un fond de la rainure en gradin via un enclenchement, et une surface du côté avant de l'écran d'affichage (7) et une surface en gradin de la rainure en gradin sont dans un même plan ;
l'écran tactile (8) est connecté à un dessus de la rainure en gradin via un enclenchement, une surface du côté arrière de l'écran tactile (8) aboute la surface en gradin, et une surface du côté avant de l'écran tactile (8) et la surface du côté avant de la coque avant (6) sont dans un même plan.
